# EUROPÄISCHE PATENTANMELDUNG

(11) **EP 2 355 072 A2**
(43) Veröffentlichungstag der Anmeldung: **10.08.2011**
(21) Anmeldenummer: 10015599.3
(22) Anmeldetag: 14.12.2010
(51) Int. Cl.: G09B 9/042, G09B 9/05

(54) **Verfahren zur Präsentation und/oder Simulation wenigstens einer Funktionalität wenigstens eines Fahrerassistenzsystems für ein Kraftfahrzeug gegenüber einem Kunden und zugehörige Einspeisevorrichtung**

(30) Priorität: 16.12.2009 DE 102009058491
(71) Anmelder: Audi AG, 85045 Ingolstadt (DE)
(72) Erfinder: Freyer, Jörn, Dr., 81827 München (DE); Brenneis, Oliver, 85748 Garching (DE); Hantschke, Christopher, 85080 Gaimersheim (DE); Kastl, Andreas, 85092 Kösching (DE); Schindler, Andreas, 85055 Ingolstadt (DE); Stadel, Benjamin, 85051 Ingolstadt (DE); Ullmann, Stefan, 80797 München (DE)
(74) Vertreter: Thielmann, Frank

(57) **Zusammenfassung**

Verfahren zur Präsentation und/oder Simulation wenigstens einer Funktionalität wenigstens eines Fahrerassistenzsystems für ein Kraftfahrzeug gegenüber einem Kunden, insbesondere einem Endabnehmer, wobei aus realen Daten einer Fahrsituation ausgewählte und/oder abgeleitete, das Fahrerassistenzsystem betreffende Eingangsdaten in das Bussystem eines unbewegten Kraftfahrzeugs oder Kraftfahrzeugcockpits, insbesondere eines Vorführkraftfahrzeugs, eingespeist werden, welche Eingangsdaten wenigstens ein Fahrzeugsystem, insbesondere ein dem Fahrerassistenzsystem zugeordnetes Fahrzeugsystem, zur Ausgabe wenigstens eines der Fahrsituation entsprechenden Hinweises ansteuern.

## Beschreibung

Die Erfindung betrifft ein Verfahren zur Präsentation und/oder Simulation wenigstens einer Funktionalität wenigstens eines Fahrerassistenzsystems für ein Kraftfahrzeug gegenüber einem Kunden, insbesondere einem Endabnehmer, sowie eine zugehörige Einspeisevorrichtung.

Heute bekannte Kraftfahrzeugmodelle umfassen meist die Möglichkeit, eine Vielzahl teilweise hochkomplexer Fahrerassistenzsysteme vorzusehen, die die Sicherheit und den Fahrkomfort im Sinne des Fahrers, also des letztendlichen Endabnehmers, erhöhen können. Leider sind viele Funktionalitäten bzw. Funktionen dieser Fahrerassistenzsysteme für den Kunden oftmals schwer vorstellbar und unverständlich.

Daher ist es bekannt, verschiedene Funktionalitäten innerhalb einer aufwendigen realen Kraftfahrzeugprobefahrt vorzustellen und somit erlebbar und verstehbar zu machen, bei der der Händler den Kunden begleitet. Den Händlern fehlen dazu jedoch häufig die Kapazitäten und den Kunden oftmals die Zeit, insbesondere, wenn der Kunde an vielen Systemen oder Funktionalitäten interessiert ist. Dabei ist zusätzlich zu beachten, dass die Präsentation sicherheitsrelevanter oder fahrdynamischer Fahrwerksfunktionen teilweise kritische Fahrsituationen notwendig macht, was im öffentlichen Verkehr zu gefährlichen Situationen führen kann, die vermieden werden sollen. Somit werden bestimmte Funktionalitäten dem Kunden nur verbal beschrieben, so dass sie vom Kunden nicht verstanden und konsequenterweise auch nicht gekauft werden.

Der Erfindung liegt daher die Aufgabe zugrunde, auf möglichst einfache und unkomplizierte Art eine Vorführung von Funktionalitäten eines Fahrerassistenzsystems, insbesondere auch von sicherheitskritischen Funktionalitäten, gegenüber einem Kunden zu realisieren, die für den Kunden leicht verständlich ist.

Zur Lösung dieser Aufgabe ist bei einem Verfahren der eingangs genannten Art erfindungsgemäß vorgesehen, dass aus realen Daten einer Fahrsituation ausgewählte und/oder abgeleitete, das Fahrerassistenzsystem betreffende Eingangsdaten in das Bussystem eines unbewegten Kraftfahrzeugs oder Kraftfahrzeugcockpits, insbesondere eines Vorführkraftfahrzeugs, eingespeist werden, welche Eingangsdaten wenigstens ein Fahrzeugsystem, insbesondere ein dem Fahrerassistenzsystem zugeordnetes Fahrzeugsystem, zur Ausgabe wenigstens eines der Fahrsituation entsprechenden Hinweises ansteuern.

Die Erfindung schlägt also vor, extern Daten in ein Fahrzeugbussystem, insbesondere einen CAN-Bus, einzuspeisen, die diverse Fahrzeugsysteme, die die Funktionalität des Fahrerassistenzsystem dem Kunden vermitteln, ansteuern. Diese Eingangsdaten - letztlich also Busbotschaften, die während einer real aufgetretenen Fahrsituation, insbesondere bei einer Testfahrt, aufgezeichnet wurden, stellen die Funktionalität des Fahrerassistenzsystems dar, ohne dass eine Probefahrt erforderlich wäre. Der Kunde nimmt einfach in dem Kraftfahrzeug bzw. dem Kraftfahrzeugcockpit Platz, welches idealerweise schon dem Kraftfahrzeug entspricht, welches er zu kaufen gedenkt, und kann verschiedene Funktionalitäten eines Fahrerassistenzsystems erleben, ohne selbst der Fahrsituation, insbesondere der kritischen Fahrsituation, ausgesetzt sein zu müssen oder eine Probefahrt durchführen zu müssen. Damit ist eine schnelle, sichere und für den Kunden leicht verständliche Methodik zur Vorführung neuer, insbesondere schwer nachvollziehbarer Fahrzeugfunktionen beschrieben, die grundsätzlich nichts weiter als ein Kraftfahrzeug bzw. Kraftfahrzeugcockpit benötigt, welches die benötige Aktuatorik, letztlich also die von dem Fahrerassistenzsystem benötigen Fahrzeugsysteme, aufweist. Dem Kunden wird der Nutzen des Fahrerassistenzsystems klar und sein Kaufwunsch wird erhöht, ohne dass hierfür kompliziertere technische Vorkehrungen zu treffen sind.

Insbesondere ist es vorteilhaft, wenn dabei ein tatsächliches Kraftfahrzeug verwendet wird, so dass der Kunde die Funktionen und Funktionalitäten von Fahrerassistenzsystemen gleich in der Umgebung erleben kann, die ihn später beim Fahren des erworbenen Produkts auch umgibt. Es ist also eine Art virtuelle Probefahrt beschrieben, die auf der Aufzeichnung von Daten während einer realen Testfahrt beruht, die zur Demonstration wiederverwertet werden können.

Mit besonderem Vorteil kann dabei ein Vorführkraftfahrzeug verwendet werden, welches in jedem Fall die für die Ausgabe entsprechender Hinweise notwendigen Fahrzeugsysteme, also die entsprechende Aktuatorik, aufweist, so dass verschiedene Funktionalitäten verschiedener Fahrerassistenzsysteme präsentiert bzw. simuliert werden können, insbesondere ohne dass die Fahrerassistenzsysteme in dem Vorführkraftfahrzeug tatsächlich realisiert sein müssen, da zur Präsentation der Funktionalität letztlich ja nur die Schnittstelle zum Kunden, also die Fahrzeugsysteme, die Hinweise ausgeben, benötigt wird. Diese Systeme werden über die in den Eingangsdaten enthaltenen Busbotschaften, welche selbstverständlich zeitcodiert vorliegen können und entsprechend ihres. Zeitablaufs bei der realen Fahrsituation eingespielt werden, wie in der realen Fahrsituation angesteuert, ohne dass diese und der weitere technische Hintergrund vorhanden sein müssen.

Beispiele für solche Hinweise ausgebenden Fahrzeugsysteme sind mannigfaltig. Nicht nur können Bildschirme oder andere optische Anzeigemittel, wie beispielsweise Warn- und Hinweisleuchten, beleuchtbare Schalter, ein Head-Up-Display, Veränderungen der Beleuchtung oder dergleichen zur Ausgabe von Hinweisen angesprochen werden, sondern selbstverständlich auch beispielsweise akustische Ausgabemittel. die Sprachhinweise oder Warntöne ausgeben können, und haptische Ausgabemittel, beispielsweise eine Ansteuerung des Lenkrads zur Vibration oder Gabe eines Lenkrucks. Selbstverständlich sind auch olfaktorische Fahrzeugsysteme zur Gabe eines Hinweises, soweit im Fahrerassistenzsystem vorgesehen, ansprechbar.

Über solche optischen und/oder akustischen und/oder haptischen und/oder olfaktorischen Ausgabemittel lassen sich letztendlich die meisten Funktionen von Fahrerassistenzsystemen deutlich und verständlich so darstellen, wie es in der realen Fahrsituation der Fall wäre, ohne dass das Fahrerassistenzsystem und die Fahrsituation selbst präsent sein müssen. So kann beispielsweise eine Reifenkontrollanzeige vorgeführt werden, ohne dass der Händler die Luft in den Reifen ablassen muss, ein Fernlichtassistenzsystem kann durch Aus- und Einschalten der Beleuchtungseinrichtung und entsprechende Hinweisleuchten präsentiert werden, ein Effizienztrainer und eine Verkehrszeichenerkennung können mit ihren entsprechenden Meldungen abgebildet werden etc. Auch Spurwechselassistenten, Längsführungssysteme und Querführungssysteme sind in ihrer Funktionalität darstellbar.

Mit besonderem Vorteil wird das Kraftfahrzeug dabei in einem Demonstrationsmodus betrieben, in dem nur vorbestimmte Fahrzeugsysteme, insbesondere zur Ausgabe von Hinweisen an den Fahrer ausgebildete Systeme, aktiv sind. Solche Modi in Kraftfahrzeugen sind beispielsweise auch heute schon bekannt und werden meist nur hersteller-, händler- oder werkstattseitig genutzt. Ein Beispiel ist der sogenannte Transportmodus, der vermeidet, dass irrtümlicherweise zur Fortbewegung des Kraftfahrzeugs führende Befehle auftreten oder dergleichen. Solch ein Transport-Modus kann beispielsweise als Demonstrationsmodus benutzt werden, es kann jedoch im Kraftfahrzeug grundsätzlich vorgesehen sein, einen solchen Demonstrationsmodus zu aktivieren.

An dieser Stelle sei darauf hingewiesen, dass rein grundsätzlich eine Vorführung von Funktionalitäten von Fahrerassistenzsystem nicht örtlich auf einen Händler oder dergleichen beschränkt ist. So kann dem Kunden beispielsweise eine Einspeisevorrichtung für die Eingangsdaten, insbesondere als Stick oder Dongle ausgebildet, mit dem Kraftfahrzeug mitgegeben werden, so dass er bei Neuentwicklungen oder dergleichen die Möglichkeit hat, entsprechende Eingangsdaten beispielsweise über das Internet zu erhalten, auf seine Einspeisevorrichtung zu speichern, sein Kraftfahrzeug in den Demonstrationsmodus zu versetzen und die neuen Funktionalitäten bzw. Fahrerassistenzsysteme zu erleben.

In einer besonders bevorzugten Ausführungsform kann dem in dem Kraftfahrzeug oder Kraftfahrzeugcockpit befindlichen Kunden die Fahrsituation optisch und/oder akustisch und/oder haptisch dargestellt werden. Zusätzlich zu den Aktionen des Fahrerassistenzsystems, wie sie durch die Eingangsdaten beschrieben werden, werden folglich die realen Daten auch dazu genutzt, dem Fahrer die Fahrsituation weitergehend zu vermitteln, so dass er die konkrete Fahrsituation, welche selbstverständlich zeitsynchron zu den ausgegebenen Hinweisen des Fahrerassistenzsystems angezeigt wird, unmittelbar den Aktionen des Fahrerassistenzsystems zuordnen kann, so dass ein noch besseres Verständnis resultiert.

Zweckmäßigerweise wird die optische Darstellung der Situation an einem Bildschirm des Kraftfahrzeugs oder Kraftfahrzeugcockpits, insbesondere an einem Bildschirm eines Mensch-Maschine-Interface (MMI), erfolgen. Es werden also den die Hinweise des Fahrerassistenzsystems beschreibenden Busbotschaften weitere Eingangsdaten hinzugefügt, die ein entsprechendes, ohnehin im Kraftfahrzeug vorhandenes optisches Ausgabemittel nutzen, um die Fahrsituation bildlich anzuzeigen. Neben einem im Kraftfahrzeug vorgesehenen Bildschirm bietet sich auch ein Head-Up-Display an, welches die Fahrsituation zeitsynchron mit den entsprechenden zu Hinweisen führenden Eingangsdaten darstellt. Wird ein optisches Ausgabemittel, welches ohnehin im Kraftfahrzeug vorhanden ist, genutzt, so wird keinerlei weitere Hardware benötigt: Das Kraftfahrzeug, insbesondere das Vorführkraftfahrzeug, ist vollkommen ausreichend.

Selbstverständlich ist es jedoch genauso denkbar, dass die optische Darstellung der Situation auf einem externen, insbesondere durch wenigstens ein Fenster des Kraftfahrzeugs oder Kraftfahrzeugcockpits sichtbaren Anzeigemittel, insbesondere einer Leinwand und/oder eine Powerwall und/oder einem Bildschirm, erfolgt, und/oder zur optischen Darstellung ein am Kopf des Kunden zu tragendes Durchsichtdisplay (Head-Mounted See-Through-Display) verwendet wird. Beispielsweise kann über einen Beamer die Fahrsituation auf eine vor der Windschutzscheibe des Kraftfahrzeugs bzw. des Kraftfahrzeugscockpits angeordnete Leinwand projiziert werden. Auch Bildschirme, beispielsweise Fernseher oder dergleichen, können eingesetzt werden. Eine besonders beeindruckende optische Darstellung lässt sich mit einer sogenannten Powerwall erreichen. Dabei handelt es sich um hochaufgelöste Bildschirmwände, mit denen es auch möglich ist, einen 3D-Effekt zu erzielen, indem diese beispielsweise eine bestimmte Formgebung aufweisen oder der Betrachter, hier der Kunde, eine bestimmte Brille zur Erzeugung des 3D-Effekts trägt. Das Kraftfahrzeug bzw. Kraftfahrzeugcockpit kann insbesondere komplett in einer Räumlichkeit, beispielsweise einem Showroom, abgestellt werden, der rundum mit derartigen Anzeigemitteln, insbesondere Powerwalls, versehen ist. Verschiedenste Möglichkeiten sind hier denkbar, um dem Fahrer realitätsnah die Fahrsituationen optisch zu vermitteln. Dabei kann es aber, insbesondere vom Aufwand her, sinnvoll sein, die Mittel in Grenzen zu halten, da die Vermittlung der Funktionalität und das Verständnis des Kunden häufig auch aufwandsärmer zu erreichen ist.

Weiter kann vorgesehen sein, dass zur haptischen Darstellung der Fahrsituation wenigstens ein Aktuator eines Lenkrads und/oder einer Pedalerie des Kraftfahrzeugs oder des Kraftfahrzeugcockpits zur Erzeugung einer Kraft und/oder Bewegung angesteuert wird. Häufig umfassen Lenkrad und/oder Pedalerie eines Kraftfahrzeugs auch Aktuatoren, die beispielweise eine haptische Rückmeldung geben können oder durch ihre Bewegung auch zur Anzeige von Fahreingriffen eines Fahrerassistenzsystems dienen können. Bekannt sind in diesem Bereich vor allem die "By-Wire-Technologien", die hier genutzt werden können, um in der Fahrsituation beispielsweise eine Lenktätigkeit und/oder eine Betätigung der Pedalerie anzuzeigen. Wird eine Lenkradbetätigung verwendet, so ist diese besonders sinnvoll bei Kraftfahrzeugen einzusetzen, bei denen die Lenkung von den Rädern entkoppelt werden kann. Doch auch zur Wiedergabe von Funktionalitäten des Fahrerassistenzsystems können derartige Aktuatoren genutzt werden, beispielsweise um das Ruckeln des Bremssignals bei einem ABS (Antiblockiersystem) zu simulieren. Auch beispielsweise Einparkhilfen nutzen häufig sogenanntes Force-Feedback, um den Fahrer vor bestimmten Richtungen zu warnen oder seine Betätigungen richtungsweisend zu beeinflussen.

In weiterer Ausgestaltung der vorliegenden Erfindung kann zur Darstellung der Fahrsituation das Kraftfahrzeug oder das Kraftfahrzeugcockpit auf einem Hexapod gelagert sein, welches zur Nachbildung von auf das Kraftfahrzeug in der Fahrsituation wirkenden Kräften und Bewegungen ausgebildet ist, und/oder wenigstens ein Fahrwerkssystem des Kraftfahrzeugs zur Nachbildung von auf das Kraftfahrzeug wirkenden Kräften und/oder Bewegungen angesteuert werden. Ein Hexapod ist eine Parallelkinematikmaschine, bei der eine Beweglichkeit in allen sechs Freiheitsgraden ermöglicht wird. Auf diese Weise können auch die wirkenden Bewegungsabläufe und Kraftwirkungen in eine wirklichkeitsnahe Fahrsituation abgebildet werden. Doch auch über Fahrwerkssysteme im Sinne eines aktiven Fahrwerks können in gewissem Umfang Kräfte und Bewegungen in der Fahrsituation simuliert werden, beispielsweise Wanken, Nicken und Hubbewegungen. Auf diese Weise kann der Kunde die Fahrsituation noch besser miterleben und im Bezug auf das Fahrerassistenzsystem beurteilen.

Zur akustischen Darstellung der Fahrsituation kann vorzugsweise wenigstens ein Geräusch der Fahrsituation, insbesondere ein Motorengeräusch und/oder ein Umgebungsgeräusch, erzeugt werden, insbesondere über ein in dem Kraftfahrzeug oder dem Kraftfahrzeugcockpit vorgesehenes akustisches Ausgabemittel. Selbstverständlich ist es genauso denkbar, externe akustische Ausgabemittel zu nutzen. Innerhalb des Kraftfahrzeugs kann beispielsweise eine Audioanlage oder dergleichen verwendet werden.

Mit besonderem Vorteil sind die Daten, die für die Darstellung der Fahrsituation genutzt werden, gemeinsam mit den den Eingangsdaten zugrunde liegenden realen Daten aufgenommen worden. So kann beispielsweise vorgesehen sein, dass zur Darstellung der Fahrsituation während der Fahrsituation, insbesondere bei einer Testfahrt, aufgenommene Sensordaten wenigstens eines Sensors, insbesondere einer Kamera und/oder eines Radarsensors und/oder eines Lidarsensors und/oder eines Ultraschallsensors und/oder eines Mikrofons und/oder eines Beschleunigungssensors und/oder eines Drehratensensors, verwendet werden. Es wird also nicht nur der Botschaftenverkehr im Fahrzeugbus während einer realen Fahrsituation aufgezeichnet, sondern es werden auch verschiedene Sensordaten aufgenommen. Beispielsweise können Videobilddaten mindestens einer Frontalkamera, gegebenenfalls auch Seiten-, Heck- und/oder Spiegelkameras verwendet werden. Bereits die Aufzeichnung erfolgt dabei zeitlich synchronisiert mit den Daten des Fahrzeugbusses, insbesondere des CAN-Busses. Derartige Videobilddaten können, gegebenenfalls zusätzlich zu weiteren Daten, beispielsweise eines Mikrofons oder von Fahrdynamiksensoren, dem Kunden, der im realen Kraftfahrzeug bzw. im Kraftfahrzeugcockpit sitzt, vorgeführt werden. Gemeinsam mit den Eingangsdaten erlebt der Kunde dann die Fahrsituation und die Wirkungsweise des Fahrerassistenzsystems. Dabei wird üblicherweise vorgesehen sein, dass er über Bedienelemente, beispielsweise das Lenkrad, die Bremse, das Gaspedal, Taster und dergleichen, nicht aktiv eingreifen kann, eine Variante, in der dies dennoch möglich ist, wird im Folgenden noch vorgestellt werden.

In einem konkreten Beispiel kann während einer solchen virtuellen Probefahrt, wie sie das erfindungsgemäße Verfahren erlaubt, der Kunde passend zu Videobilddaten der Fahrsituation im realen Kraftfahrzeug bzw. im Kraftfahrzeugcockpit die Wirkungsweise der vorgestellten Funktion erleben und verstehen. Z. B. wird dem Kunden eine Spurwechselsituation als Video gezeigt. Passend zum Ausschervorgang werden die Warnleuchten des Spurwechselassistenten im realen stehenden Kraftfahrzeug bzw. im Kraftfahrzeugcockpit angesteuert, oder es erfolgt eine Vibration des Lenkrads beim Überfahren einer Fahrbahnmarkierung.

Wie bereits erwähnt, können die Eingangsdaten zweckmäßigerweise über eine an den Fahrzeugbus angeschlossene Einspeisevorrichtung auf den Fahrzeugbus gegeben werden. Eine solche Einspeisevorrichtung kann, insbesondere, wenn sie lediglich in einem bestimmten zeitlichen Ablauf Daten aus ihrem Speicher auf den Fahrzeugbus und gegebenenfalls auf weitere externe Ausgabemittel zu geben hat, einfach und kompakt gestaltet sein und kann beispielsweise eine Steuereinheit, ein Speichermedium und eine entsprechende Anschlussmöglichkeit für den Fahrzeugbus und gegebenenfalls andere externe Ausgabemittel umfassen. Insbesondere in dem Fall, dass nur das Kraftfahrzeug für das erfindungsgemäße Verfahren genutzt wird, kann als Einspeisevorrichtung ein Speicherstick und/oder ein Dongle verwendet werden. In diesem Fall ist, wie bereits beschrieben, auch eine private, vom Händler losgelöste Nutzung des erfindungsgemäßen Verfahrens möglich, beispielsweise, wenn ein Kunde an seinem bereits gekauftem Kraftfahrzeug eine Demonstration einer Funktionalität eines neuen Fahrerassistenzsystems erleben und verstehen möchte. Dann können die entsprechenden Daten, beispielsweise von einem Computer ausgehend, auf den Speicherstick bzw. Dongle abgespeichert werden, welcher eine Steuereinheit besitzt, die die Eingangsdaten gemäß ihrem Zeitablauf in den Fahrzeugbus schickt, während sich das Kraftfahrzeug in einem Demonstrationsmodus befindet. Es sei angemerkt, dass es selbstverständlich auch denkbar ist, dass im Demonstrationsmodus ein in einem Steuergerät des Kraftfahrzeugs vorgesehenes Softwaremittel lediglich auf der Einspeisevorrichtung gespeicherte Daten ausliest und diese selbst entsprechend verwendet.

Selbstverständlich sind natürlich auch beliebige andere Ausgestaltungen der Einspeisevorrichtung denkbar, Voraussetzung ist nur, dass sie, beispielsweise über eine Diagnosebuchse, an den Fahrzeugbus des Kraftfahrzeugs bzw. des Kraftfahrzeugcockpits angeschlossen werden kann und dazu ausgebildet ist, die Eingangsdaten auf den Fahrzeugbus zu geben.

Zweckmäßigerweise kann vorgesehen sein, dass eine Steuereinheit der Einspeisevorrichtung ein Steuergerät des Fahrerassistenzsystems simuliert. Wie bereits erwähnt, ist es grundsätzlich nicht nötig, dass das Fahrerassistenzsystem selber in dem Kraftfahrzeug bzw. dem Kraftfahrzeugcockpit realisiert ist, wenn nur die nötige Aktuatorik vorhanden ist. In solchen Fällen kann die Steuereinheit der Einspeisevorrichtung das entsprechende Steuergerät simulieren, nachdem sie ja auch an den Fahrzeugbus des Kraftfahrzeugs angeschlossen ist. Die Steuereinheit kann dann beispielsweise Rückmeldungen an ein Steuergerät des Fahrerassistenzsystems entgegennehmen und sogar zu weiteren Reaktionen oder dergleichen ausgebildet sein, worauf im Folgenden noch näher eingegangen werden wird.

In weiterer Ausgestaltung der vorliegenden Erfindung kann vorgesehen sein, dass die Einspeisevorrichtung eine Recheneinheit umfasst oder mit einer Recheneinheit kommuniziert, die die Fahrsituation simuliert, insbesondere in Abhängigkeit von Eingaben des Kunden. Während prinzipiell eine einfache und aufwandsarme Ausgestaltung eines einfachen "Vorführmodus" ohne Eingriffsmöglichkeit des Kunden bevorzugt werden kann, ist es bei der vorliegenden Erfindung grundsätzlich durchaus möglich, Handlungen des Kunden im Kraftfahrzeug bzw. im Kraftfahrzeugcockpit aufzunehmen und als Eingabe in eine Simulation zu verwenden, so dass letztlich von der aufgezeichneten realen Fahrsituation abhängig von den Eingaben des Kunden abgewichen werden kann. In einer solchen erweiterten virtuellen Probefahrt kann also das Kraftfahrzeug bzw. das Kraftfahrzeugcockpit als eine Art Simulator benutzt werden, so dass der Fahrer in einer Verkehrssimulation, die von der Fahrsituation ausgeht, gegebenenfalls in einem gewissen Maße eingeschränkt, selbst agieren kann, folglich in geeigneten Fahrsituationen die gewünschte Zusatzausstattung interaktiv erleben kann. Handlungen des Fahrers an realen Bedienelementen des Kraftfahrzeugs bzw. des Kraftfahrzeugcockpits führen zu erlebbaren Reaktionen insbesondere des Fahrerassistenzsystems. Beispielsweise kann ein Lenken des Fahrers in der Simulation zu einem Spurwechsel führen. Passend hierzu wird im realen Kraftfahrzeug bzw. Kraftfahrzeugcockpit das Fahrerassistenzsystem angesteuert und verarbeitet die Eingabewerte, beispielsweise Blinken bei Spurwechsel, obwohl das Kraftfahrzeug steht. Ist das entsprechende Fahrerassistenzsystem nicht realisiert, kann ein entsprechendes Steuergerät auch in der Recheneinheit emuliert werden, wie oben bereits beschrieben. Typische Eingangsgrößen für eine derartige Simulation können sein: Gaspedalstellung, Kupplungsstellung, Lenkradstellung, Bremspedalstellung, Blinker, Bedienelemente (Taster, Tempomathebel, ...) sowie MMI-Einstellungen, beispielsweise Einstellungen von Fahrwerkregelsystemen bzw. Fahrerassistenzsystemen (Sportmodus, Komfortmodus, vorgegebene Abstände, ...). Alle diese Eingangsgrößen können insbesondere auch vom Fahrzeugbus über die Einspeisevorrichtung abgezweigt und in die Recheneinheit weitergeliefert werden. Recheneinheiten, die Fahrsituationen simulieren, sind im Stand der Technik bereits weitgehend bekannt und müssen hier nicht näher dargelegt werden.

In einer besonders vorteilhaften Weiterbildung des Verfahrens kann vorgesehen sein, dass externe Konfigurationsdaten eines Kunden in Bezug auf zu präsentierende und/oder simulierende Fahrerassistenzsysteme in die Einspeiseeinrichtung eingegeben werden. Auf diese Weise wird der Vorgang komplett in den Entscheidungsfindungsprozess des Kunden eingebunden. So kann der Kunde beispielsweise die Möglichkeit erhalten, sich über das Internet oder eine entsprechende beispielsweise auf einer CD gelieferte Software sein Wunschkraftfahrzeug zu konfigurieren. Es kann vorgesehen sein, dass den Kunden die Fahrerassistenzsysteme bereits über dieses Medium ausführlich erklärt werden. Eine derartig erstellte Konfiguration eines Wunschkraftfahrzeugs, gegebenenfalls auch die Konfigurationen mehrerer Wunschkraftfahrzeuge, können als Konfigurationsdaten gespeichert werden. Neben der Verwendung im erfindungsgemäßen Verfahren kann im Übrigen auch vorgesehen sein, dass diese Konfigurationsdaten in ein PC-Spiel importiert werden, so dass beispielsweise auch dort das Fahrerassistenzsystem spielerisch in einer Softwareumgebung näher erläutert werden kann. Konfigurationsdaten seines Wunschkraftfahrzeugs kann der Kunde nun, beispielsweise auf einem entsprechenden Datenträger, insbesondere einem USB-Stick, zu einem Händler mitbringen, welcher diese Konfigurationsdaten nutzt, um die Einspeisevorrichtung entsprechend zu konfigurieren und dem Kunden ein Erleben der von ihm gewählten Funktionalitäten bzw. Fahrerassistenzsysteme im realen Kraftfahrzeug bzw. im Kraftfahrzeugcockpit zu erlauben. Dafür kann es auch ausreichend sein, einfach die Konfigurationsdaten in die Einspeisevorrichtung einzuladen, welche dann automatisch wenigstens eine in ihrem Speichermittel gespeicherte Fahrsituation auswählt und die entsprechende Vorführung der Funktionalität, wie es hier beschrieben ist, ermöglicht.

Das erfindungsgemäße Verfahren kann also in den Gesamtinformationsablauf während einer Kaufentscheidung eingebunden werden, indem sein beispielsweise in einem Kraftfahrzeug-Konfigurator als Konfigurationsdaten definiertes Wunschkraftfahrzeug mittels des erfindungsgemäßen Verfahrens in einem realen Kraftfahrzeug oder auch einem Kraftfahrzeugcockpit erlebbar gemacht werden kann, was auch hochkomplexe Funktionalitäten oder Funktionalitäten, die nur in kritischen Situationen auftreten, betrifft. Die Funktionsweise und der Nutzen von Fahrzeugfunktionen können dem Kunden somit sehr eindringlich vermittelt werden.

Mit besonderem Vorteil kann zudem vorgesehen sein, dass die Vorführung noch durch weitere, über interne und/oder externe Ausgabemittel wiederzugebende Zusatzinformationen ergänzt wird. Beispielsweise können also, während die Fahrsituation simuliert wird, die Eingangsdaten auf den Fahrzeugbus gegeben werden und/oder die Fahrsituation dargestellt wird, Animationen und/oder interaktive Erklärungen eingeblendet werden, die die Funktionsweise und den Nutzen von Funktionalitäten von Fahrerassistenzsystemen dem Kunden noch deutlicher und verständlicher machen. Somit bietet das erfindungsgemäße Verfahren auch die Möglichkeit, die aus den Fahrsituationen gewonnenen bzw. gegebenenfalls weiter simulierten Daten um wichtig, das Verstehen durch den Kunden verbessernde und ergänzende Informationen zu erweitern.

Generell gilt für das erfindungsgemäße Verfahren, dass der Fahrer nach der virtuellen Probefahrt gegebenenfalls mit demselben Kraftfahrzeug eine reale Probefahrt vornehmen kann und die Systeme auch real erleben kann.

Neben dem Verfahren betrifft die Erfindung auch eine Einspeisevorrichtung zur Präsentation und/oder Simulation wenigstens einer Funktionalität wenigstens eines Fahrerassistenzsystems an einem einen Fahrzeugbus umfassenden Kraftfahrzeug oder Kraftfahrzeugcockpit, umfassend ein Anschlussmittel zum Anschluss der Einspeisevorrichtung an den Fahrzeugbus, ein Speichermittel und eine zur Durchführung des erfindungsgemäßen Verfahrens ausgebildete Steuereinheit. Die Steuereinheit der erfindungsgemäßen Einspeisevorrichtung ist mithin dazu ausgebildet, aus realen Daten einer Fahrsituation ausgewählte und/oder abgeleitete, das Fahrerassistenzsystem betreffende Eingangsdaten in das Bussystem eines unbewegten Kraftfahrzeugs oder Kraftfahrzeugcockpits, insbesondere eines Vorführkraftfahrzeugs, einzuspeisen, welche Eingangsdaten wenigstens ein Fahrzeugsystem, insbesondere ein dem Fahrerassistenzsystem zugeordnetes Fahrzeugsystem, zur Ausgabe wenigstens eines der Fahrsituation entsprechenden Hinweises ansteuern. Die bereits bezüglich des erfindungsgemäßen Verfahrens getätigten Ausführungen lassen sich selbstverständlich analog auf die erfindungsgemäße Einspeisevorrichtung übertragen.

Neben den Eingangsdaten können dabei auch an externe Darstellungsmittel bzw. Ausgabemittel weiterzugebende Darstellungsdaten im Speichermittel vorliegen, so dass die Einspeisevorrichtung in vorteilhafter weiterer Ausgestaltung eine Schnittstelle zum Anschluss externer Darstellungsmittel, insbesondere einer optischen und/oder akustischen Darstellungseinrichtung und/oder eines Hexapods, umfassen. Die üblicherweise zeitcodierten, also mit einem gewünschten Zeitverlauf versehenen Eingangsdaten und Darstellungsdaten werden zeitsynchron die Fahrsituation wiedergebend auf den Fahrzeugbus des Kraftfahrzeugs oder des Kraftfahrzeugcockpits gegeben. Dies alles wird von der Steuereinheit gesteuert, welche im Übrigen zusätzlich auch zur Emulation wenigstens eines Steuergeräts wenigstens eines Fahrerassistenzsystems ausgebildet sein kann.

Sollen auch Abweichungen von der aufgezeichneten realen Fahrsituation, insbesondere durch Eingaben eines Fahrers, möglich sein, so kann die Einspeisevorrichtung eine Recheneinrichtung zur Simulation einer Fahrsituation umfassen und/oder zur Kommunikation mit einer solchen ausgebildet sein.

Eine derartige Einspeisevorrichtung kann, wie bereits beschrieben, auch als Speicherstick und/oder Dongle, jedenfalls aber auch als tragbare, einem Kraftfahrzeug zugehörige Vorrichtung ausgebildet sein. Diese kann dann beispielsweise vom Besitzer eines Kraftfahrzeugs privat genutzt werden, um dieses als Demonstrationsplattform für neue, beispielsweise aus dem Internet heruntergeladene Funktionalitäten von Fahrerassistenzsystemen zu nutzen. Hierfür kann die Einspeisevorrichtung beispielsweise einen USB-Anschluss umfassen. Das Kraftfahrzeug kann dann, wie bereits beschrieben, in einen Demonstrationsmodus versetzt werden und die Eingangsdaten werden auf den Fahrzeugbus gegeben, während beispielsweise gleichzeitig auf dem MMI eine Darstellung einer Fahrsituation gezeigt wird. So kann ein Kunde auch privat neue Funktionalitäten erleben.

Eine Präsentationsvorrichtung zur Durchführung des erfindungsgemäßen Verfahrens kann neben einer Einspeisevorrichtung zusätzlich auch noch Darstellungsmittel, wie sie bereits beschrieben wurden, und das Kraftfahrzeug oder Kraftfahrzeugcockpit umfassen. Auch eine Recheneinheit zur Simulation kann vorgesehen sein. Beispielsweise kann ein Showroom geschaffen werden, in dem ein Kraftfahrzeug, insbesondere ein Vorführkraftfahrzeug, auf einem Hexapod gelagert von zur Darstellung geeigneten Wänden, insbesondere von Powerwalls, umgeben ist, wobei zusätzlich noch akustische Darstellungsmittel bzw. Ausgabemittel vorgesehen werden können. Dann ergibt sich ein beispielsweise bei größeren Händlern oder auf Messen einsetzbarer Showroom, der eine höchst realitätsgenaue Darstellung von Funktionalitäten von Fahrerassistenzsystemen erlaubt.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine erfindungsgemäße Einspeisevorrichtung, und
- Fig. 2: ein Blockdiagramm zur Erläuterung des erfindungsgemäßen Verfahrens.

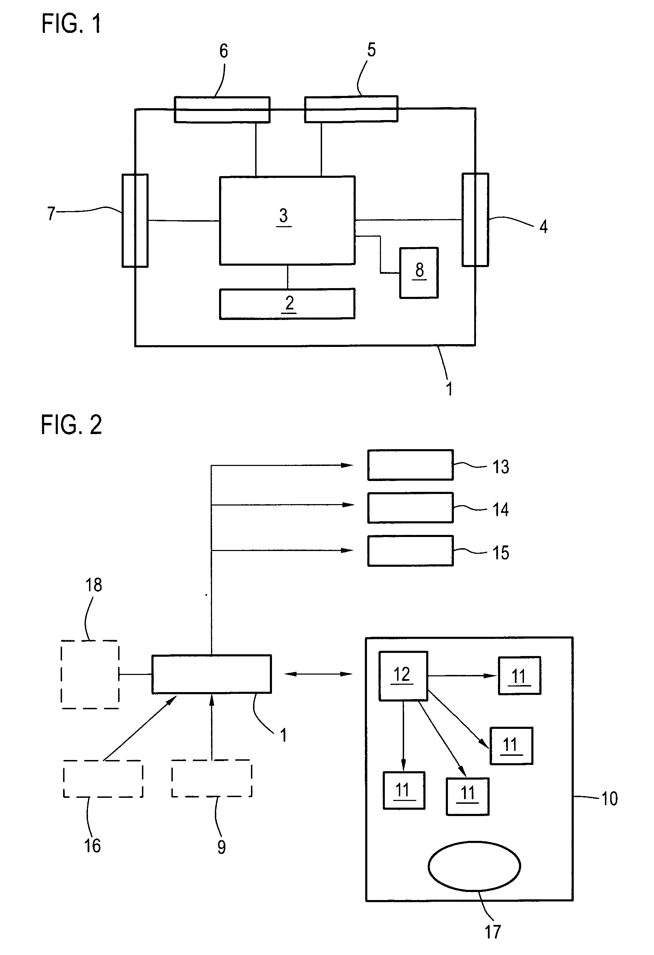

Fig. 1 zeigt die Prinzipskizze einer erfindungsgemäßen Einspeisevorrichtung 1. Sie umfasst ein Speichermittel 2 sowie eine Steuereinheit 3 und kann über Schnittstellen 4, 5, 6 und 7 mit weiteren Vorrichtungen und Geräten verbunden werden. Zudem kann die Einspeisevorrichtung 1 eine eigene Energiequelle 8, beispielsweise eine Batterie, umfassen.

Über die Schnittstelle 4 kann die Einspeisevorrichtung 1 dabei mit dem Fahrzeugbus eines Kraftfahrzeuges, insbesondere eines Vorführkraftfahrzeuges, oder eines zur Vorführung von Funktionalitäten eines Fahrerassistenzsystems dienenden Fahrzeugcockpits verbunden werden. Die Schnittenstellen 5 und 6 ermöglichen den Anschluss weiterer externer Darstellungsmittel, beispielsweise eines Hexapods, optischer Darstellungsmittel wie Bildschirme oder Powerwalls oder auch akustischer Darstellungsmittel. Der Anschluss 7 ist ein USB-Anschluss, über den die Einspeisevorrichtung 1 beispielsweise mit einem Computer verbunden werden kann; es ist jedoch auch denkbar, einen Speicherstick an die Einspeisevorrichtung 1 anzuschließen, von dem dann Konfigurationsdaten oder dergleichen ausgelesen werden können.

Im Speichermittel sind Eingangsdaten, die an den Fahrzeugbus über die Schnittstelle 4 zu übergeben sind, und Darstellungsdaten, die sowohl über die Schnittstelle 4 als auch über die Schnittstellen 5 und 6 gesendet werden können, für verschiedene Fahrsituationen und/oder Funktionalitäten des Fahrerassistenzsystems abgespeichert. Es sei an dieser Stelle darauf hingewiesen, dass es selbstverständlich auch denkbar ist, für jede einzelne Funktionalität oder für bestimmte Gruppe von Funktionalitäten jeweils eine Einspeisevorrichtung 1 vorzusehen.

Die Eingangsdaten und die Darstellungsdaten sind zeitcodiert, das bedeutet, sie sollen zu bestimmten Zeitpunkten so ausgegeben werden können, dass eine synchrone Darstellung der Fahrsituation mit der Ausgabe verschiedener Hinweise eines Fahrerassistenzsystems an den Fahrer bzw. den Kunden ermöglicht wird. Die Eingangsdaten sprechen dabei im vorliegenden Ausführungsbeispiel lediglich Aktuatoren in Fahrzeugsystemen an, die der Fahrsituation entsprechende Hinweise im Rahmen der Funktionalität des Fahrerassistenzsystems ausgeben.

Während es möglich sein kann, dass extern ein oder mehrere wiederzugebende Fahrsituationen ausgewählt werden, ist es auch denkbar, dass Konfigurationsdaten über die Schnittstelle 7 an die Steuereinheit 3 gegeben werden, welche dann selbsttätig zu der durch die Konfigurationsdaten beschriebenen Konfiguration eines Kraftfahrzeugs, also der Information, welche Fahrerassistenzsysteme vorgesehen sind, wenigstens eine abzuspielende Fahrsituation auswählt. Über die Schnittstelle 7 ist es im Übrigen auch möglich, extern Eingangsdaten und Darstellungsdaten in das Speichermittel einzuspeichern, welche dann wiedergegeben werden sollen.

Wie bereits beschrieben, basieren die Eingangsdaten und die Darstellungsdaten auf realen Daten einer Fahrsituation. Die Eingangsdaten sind dabei von einem Fahrzeugbus eines Fahrzeugs während einer Testfahrt aufgezeichnet worden; zeitsynchron hierzu sind die Darstellungsdaten durch Sensoren aufgenommen worden, beispielsweise eine oder mehrere Kameras, Radarsensoren, Lidarsensoren, Ultraschallsensoren, Mikrofone, Fahrdynamiksensoren und dergleichen.

Mittels der Einspeisevorrichtung 1 ist es nun möglich, das erfindungsgemäße Verfahren durchzuführen, indem die Eingangsdaten, die Fahrzeugbus-Botschaften entsprechen, sowie gegebenenfalls Darstellungsdaten, gegebenenfalls aufbereitet, an den Fahrzeugbus weitergegeben werden können, so dass im Kraftfahrzeug bzw. Kraftfahrzeugcockpit die den Fahrzeugbus-Botschaften entsprechenden Hinweise ausgegeben werden, zeitsynchron mit der Darstellung der entsprechenden Fahrsituation. Ein in dem Kraftfahrzeug bzw. Kraftfahrzeugcockpit befindlicher Kunde kann somit die Funktionalität des Fahrerassistenzsystems anhand der Fahrsituation erleben.

In dem Speichermittel 2 können zusätzlich noch Zusatzinformationen gespeichert sein, die zu bestimmten Zeitpunkten im Ablauf der Fahrsituation zur Erklärung für den Kunden ausgegeben werden, beispielsweise Animationen oder erklärende Hinweise, die zusätzlich dargestellt werden können.

Die Schnittstellen 5 und 6 erlauben es, auch auf zu dem Kraftfahrzeug bzw. Kraftfahrzeugcockpit externen Darstellungsmitteln bzw. Ausgabemitteln die Fahrsituation darstellende Ausgaben bzw. Darstellungen zu erzeugen. Ferner ist die Steuereinheit dazu ausgebildet, ein Steuergerät eines Fahrerassistenzsystems zu emulieren, nachdem ja über die Schnittstelle 4 der Anschluss an den Fahrzeugbus, beispielsweise über eine Diagnosebuchse, erfolgen kann. Es sei zudem darauf hingewiesen, dass die Steuereinheit 3 auch als eine Recheneinheit ausgebildet sein kann bzw. eine Recheneinheit umfassen kann, die zur Simulation der Fahrsituation abhängig von Eingaben des Kunden, welche über Fahrzeugbus-Botschaften über die Schnittstelle 4 empfangen werden können, ausgebildet ist. Es ist jedoch auch eine Schnittstelle zu einer externen Recheneinrichtung denkbar.

Eine solche Einspeisevorrichtung 1 kann auch für den Privatgebrauch erzeugt werden. In diesem Fall kann sie beispielsweise als Speicherstick oder Dongle ausgebildet sein, der an einen entsprechenden Anschluss, beispielsweise eine Diagnosebuchse, eines Kraftfahrzeugs angeschlossen wird, woraufhin das Kraftfahrzeug in einen Demonstrationsmodus geschaltet wird, in dem nur vorbestimmte Fahrzeugsysteme ansteuerbar sind. Dann kann das Kraftfahrzeug als Vorführplattform für neue Funktionalitäten neuer Fahrerassistenzsysteme genutzt werden, insbesondere, wenn vorher, beispielsweise über die USB-Schnittstelle 7, entsprechende Eingangsdaten und gegebenenfalls Darstellungsdaten in das Speichermittel 2 gespeichert wurden.

Fig. 2 erläutert nun anhand eines schematischen Blockdiagramms näher die Funktion der erfindungsgemäßen Einspeisevorrichtung 1 im Rahmen des erfindungsgemäßen Verfahrens. Denn mit dem erfindungsgemäßen Verfahren ist es möglich, einem Kunden Funktiönalitäten von Fahrerassistenzsystemen für ein Kraftfahrzeug aufwandsarm und dennoch gut verständlich zu präsentieren. Dies ist eingebettet in einen üblichen Informations- und Kaufentscheidungsablauf, in dem zunächst beispielsweise Informationen über das Internet abgerufen werden. Beispielsweise sind Internet-Plattformen oder auch Softwareprogramme bekannt, mit denen sich ein Kunde ein Wunschkraftfahrzeug konfigurieren kann (Kraftfahrzeug-Konfigurator). Entsprechende Konfigurationsdaten 9 können beispielsweise auf einem Speicherstick oder dergleichen gespeichert werden und zu einem Händler mitgebracht werden, wo die entsprechenden Funktionalitäten vorgeführt werden sollen.

Entsprechend ist bei dem Händler ein Vorführkraftfahrzeug 10 vorgesehen, welches insbesondere alle für alle vorzuführenden Fahrerassistenzsysteme benötigten, für die Interaktion mit dem Fahrer zuständigen Fahrzeugsysteme 11 umfasst. Auch wenn die Fahrerassistenzsysteme selber nicht unter den Fahrzeugsystemen 11 zu finden sind, ist es folglich möglich, die Hinweise, die das Fahrerassistenzsystem erzeugen würde, darzustellen. Die Fahrzeugsysteme 11 können neben üblichen Ausgabemitteln wie ein Mensch-Maschine-Interface (MMI), Schaltern, Anzeigen, Leuchten, Lautsprechern und dergleichen auch ein mit Aktuatoren versehenes Lenkrad, welches insbesondere von den Rädern abkoppelbar ist, und mit entsprechender Aktuatorik versehende Pedalerie umfassen. Einige Fahrzeugsysteme 11 können selbstverständlich auch für den Kunden wahrnehmbare, nach außen hin wirkende Ausgabemittel sein, beispielsweise Scheinwerfer, Fahrtrichtungsanzeiger, eine Hupe oder dergleichen. Auch Fahrwerkssysteme können unter den Fahrzeugsystemen 11 sein, wie im Folgenden noch näher dargestellt werden wird.

Alle diese Fahrzeugsysteme 11 sind über einen Fahrzeugbus 12 verbunden. An diesen Fahrzeugbus 12 kann die Einspeisevorrichtung 1, beispielsweise über eine Diagnosebuchse, mittels der Schnittstelle 4 angeschlossen werden.

Im vorliegenden Beispiel sind, beispielsweise in einem Showroom eines Händlers, auch externe Darstellungsmittel vorgesehen, hier optische Darstellungsmittel 13, akustische Darstellungsmittel 14 und ein Hexapod 15, auf dem das Vorführkraftfahrzeug 10 platziert werden kann.

Es sei an dieser Stelle nochmals hervorgehoben, dass alle diese externen Darstellungsmittel 13 - 15 optional sind und eine Darstellung einer Fahrsituation auch über beispielsweise den Bildschirm eines MMI sowie im Kraftfahrzeug vorgesehene Lautsprecher erfolgen kann. Es ist sogar denkbar, wie oben bereits angemerkt, dass Fahrwerksysteme angesteuert werden, um bestimmte Kräfte und Bewegungen, die in der realen Fahrsituation auf das Kraftfahrzeug 10 wirken, mittels des Kraftfahrzeug 10 selber abzubilden.

Optische externe Darstellungsmittel 13 können beispielsweise ein Bildschirm, ein Beamer mit einer Leinwand oder auch Powerwalls sein. Externe akustische Darstellungsmittel 14 können Lautsprecher umfassen, beispielsweise um Motor- und/oder Umgebungsgeräusche wiederzugeben. Die Funktionsweise eines Hexapods 15, um auf das Kraftfahrzeug wirkende Kräfte und Bewegungen abzubilden, ist weithin bekannt.

Wie bereits beschrieben, verwendet das erfindungsgemäße Verfahren reale Daten 16 einer Fahrsituation. Diese werden vorab, beispielsweise bei einer Testfahrt, aufgenommen und gegebenenfalls entsprechend aufbereitet, so dass nur die gewollten Eingangsdaten und die gewollten Darstellungsdaten im Speichermittel 2 der Einspeisevorrichtung 1 verbleiben.

Es sei nun angenommen, dass ein Kunde, der Interesse an einer speziellen Funktionalität eines Fahrerassistenzsystems hat und diese besser verstehen möchte, entsprechende Konfigurationsdaten 9 gespeichert hat und mit zum. Händler, bei dem das Vorführkraftfahrzeug 10 steht, bringt. Diese Konfigurationsdaten 9 werden dann genutzt, um eine oder mehrere zum Präsentieren bzw. Simulieren der Funktionalität geeignete Fahrsituationen auszuwählen. Das Vorführkraftfahrzeug 10 wird dann in einen Demonstrationsmodus geschaltet, in dem nur vorbestimmte Fahrzeugsysteme 11, welche, wie beschrieben, insbesondere zur Ausgabe von Hinweisen an den Fahrer ausgebildet sind, aktiv und über den Fahrzeugbus ansprechbar sind. Der Kunde nimmt, wie bei 17 angedeutet, im Vorführkraftfahrzeug Platz, wobei an dieser Stelle nochmals hervorgehoben sei, dass es grundsätzlich auch möglich ist, lediglich ein Kraftfahrzeugcockpit mit dem Fahrzeugbus 12 und den Fahrzeugsystemen 11 zu verwenden. Bevorzugt wird jedoch, allein aufgrund des besseren Eindruckes und des besseren Verständnisses durch den Kunden, ein tatsächliches Kraftfahrzeug 10.

Die Steuereinheit 3 wird nun aktiv und sendet - selbstverständlich nach dem festgelegten, synchronisierten Zeitablauf - die Eingangsdaten und die Darstellungsdaten an den Fahrzeugbus 12 bzw. die Darstellungsmittel 13 - 15, so dass dem Kunden zeitsynchron die Fahrsituation und die daraus resultierenden Hinweise des Fahrerassistenzsystems dargestellt werden. Dabei können, wie bereits erwähnt, auch Zusatzinformationen genutzt und dargestellt werden, um den Verstehenseffekt beim Kunden zu verbessern.

Der Kunde erlebt also während einer virtuellen Probefahrt passend zur Darstellung der Fahrsituation, beispielsweise mittels Videodaten, Audiodaten und gegebenenfalls auch Fahrzeugbewegungen, im realen Kraftfahrzeug 10 die Wirkungsweise der vorgestellten Funktionalität. Dabei ist es ihm allerdings in dieser ersten beschriebenen Ausführungsform nicht möglich, über Bedienelemente aktiv einzugreifen. Beispielsweise kann dem Kunden eine Spurwechselsituation auf einer Powerwall oder einem Bildschirm des MMI gezeigt werden und passend zum Ausschervorgang die Warnleuchten, die dem Spurwechselassistenten zugeordnet sind, im realen, aber unbewegten Kraftfahrzeug angesteuert werden. Auch eine Vibration des Lenkrads beim Überfahren einer Spurmarkierung oder dergleichen kann zeitsynchron im realen, aber unbewegten Kraftfahrzeug dargestellt werden.

Es sei an dieser Stelle noch darauf hingewiesen, dass, wenn dies der Erlebens- und Verständniswirkung zuträglich ist, auch Aktuatoren am Lenkrad und der Pedalerie genutzt werden können, um diese Bedienelemente zu betätigen und dem Kunden auch deren Betätigung zu vermitteln.

Es ist jedoch eine zweite Variante des erfindungsgemäßen Verfahrens denkbar, in der lediglich von der auf realen Daten basierenden Fahrsituation ausgegangen wird und eine aktive Eingriffsmöglichkeit des Kunden besteht. Der Fahrer kann dann also nach der Art einer erweiterten virtuellen Probefahrt das Vorführkraftfahrzeug 10 als eine Art Simulator benutzen. Hierzu ist in der Einspeisevorrichtung 1 selber bzw. in Kommunikationsverbindung mit dieser eine Recheneinheit 18, in Fig. 2 gestrichelt angedeutet, vorgesehen, mit Hilfe derer die Verkehrssituation ermittelt wird. Verschiedene erlaubte Handlungen des Kunden oder jegliche Handlungen des Kunden an den realen Bedienelementen des Vorführkraftfahrzeugs 10 führen zu erlebbaren Fahrzeug- und Fahrerassistenzsystemreaktionen. Beispielsweise kann ein Lenken des Fahrers in der Simulation zu einem Spurwechsel führen, wobei passend dazu im realen Kraftfahrzeug das Fahrerassistenzsystem, sofern es vorhanden ist, angesteuert wird und die Eingabewerte aus dem realen stehenden Kraftfahrzeug 10 verarbeitet. Ist das Fahrerassistenzsystem nicht Teil des Vorführkraftfahrzeugs 10, kann dieses beispielsweise über die Steuereinheit 3 der Einspeisevorrichtung 1 emuliert werden. Typische Eingangsgrößen für die Simulation können beispielsweise die Gaspedalstellung, die Kupplungsstellung, die Lenkradstellung, die Bremspedalstellung, die Betätigung des Fahrtrichtungsanzeigers, die Betätigung von Bedienelementen oder auch Einstellungen am Mensch-Maschine-Interface (MMI) sein. Diese liegen als CAN-Botschaften vor und können über die Schnittstelle 4 und die Einspeisevorrichtung 1 empfangen und verarbeitet werden.

An eine solche virtuelle Probefahrt kann sich selbstverständlich gegebenenfalls auch eine reale Probefahrt, insbesondere auch mit dem Vorführkraftfahrzeug 10, anschließen.

## Patentansprüche

1. Verfahren zur Präsentation und/oder Simulation wenigstens einer Funktionalität wenigstens eines Fahrerassistenzsystems für ein Kraftfahrzeug gegenüber einem Kunden, insbesondere einem Endabnehmer,
**dadurch gekennzeichnet,**
**dass** aus realen Daten einer Fahrsituation ausgewählte und/oder abgeleitete, das Fahrerassistenzsystem betreffende Eingangsdaten in das Bussystem eines unbewegten Kraftfahrzeugs oder Kraftfahrzeugcockpits, insbesondere eines Vorführkraftfahrzeugs, eingespeist werden, welche Eingangsdaten wenigstens ein Fahrzeugsystem, insbesondere ein dem Fahrerassistenzsystem zugeordnetes Fahrzeugsystem, zur Ausgabe wenigstens eines der Fahrsituation entsprechenden Hinweises ansteuern.

2. Verfahren nach Anspruch 1,
**dadurch gekennzeichnet,**
**dass** das Kraftfahrzeug in einem Demonstrationsmodus betrieben wird, in dem nur vorbestimmte Fahrzeugsysteme, insbesondere zur Ausgabe von Hinweisen an den Fahrer ausgebildete Systeme, aktiv sind.

3. Verfahren nach Anspruch 1 oder 2,
**dadurch gekennzeichnet,**
**dass** dem in dem Kraftfahrzeug oder Kraftfahrzeugcockpit befindlichen Kunden die Fahrsituation optisch und/oder akustisch und/oder haptisch dargestellt wird.

4. Verfahren nach Anspruch 3,
**dadurch gekennzeichnet,**
**dass** die optische Darstellung der Situation an einem Bildschirm des Kraftfahrzeugs oder Kraftfahrzeugcockpits, insbesondere an einem Bildschirm eines Mensch-Maschine-Interface, und/oder auf einem externen, insbesondere durch wenigstens ein Fenster des Kraftfahrzeugs oder Kraftfahrzeugcockpits sichtbaren Anzeigemittel, insbesondere einer Leinwand und/oder einer Powerwall und/oder einem Bildschirm, erfolgt, und/oder zur optischen Darstellung ein am Kopf des Kunden zu tragendes Durchsichtdisplay verwendet wird.

5. Verfahren nach Anspruch 3 oder 4,
**dadurch gekennzeichnet,**
**dass** zur haptischen Darstellung der Fahrsituation wenigstens ein Aktuator eines Lenkrads und/oder einer Pedalerie des Kraftfahrzeugs oder des Kraftfahrzeugcockpits zur Erzeugung einer Kraft und/oder Bewegung angesteuert wird.

6. Verfahren nach einem der Ansprüche 3 bis 5,
**dadurch gekennzeichnet,**
**dass** zur Darstellung der Fahrsituation das Kraftfahrzeug oder das Kraftfahrzeugcockpit auf einem Hexapod gelagert ist, welches zur Nachbildung auf das Kraftfahrzeug in der Fahrsituation wirkender Kräfte und Bewegungen ausgebildet ist, und/oder wenigstens ein Fahrwerksystem des Kraftfahrzeugs zur Nachbildung von auf das Kraftfahrzeug wirkenden Kräften und/oder Bewegungen angesteuert wird.

7. Verfahren nach einem der Ansprüche 3 bis 6,
**dadurch gekennzeichnet,**
**dass** zur akustischen Darstellung der Fahrsituation wenigstens ein Geräusch der Fahrsituation, insbesondere ein Motorengeräusch und/oder ein Umgebungsgeräusch, erzeugt wird, insbesondere über ein in dem Kraftfahrzeug oder dem Kraftfahrzeugcockpit vorgesehenes akustisches Ausgabemittel.

8. Verfahren nach einem der Ansprüche 3 bis 7,
**dadurch gekennzeichnet,**
**dass** zur Darstellung der Fahrsituation während der Fahrsituation, insbesondere bei einer Testfahrt, aufgenommene Sensordaten wenigstens eines Sensors, insbesondere einer Kamera und/oder eines Radarsensors und/oder eines Lidarsensors und/oder eines Ultraschallsensors und/oder eines Mikrophons und/oder eines Beschleunigungssensors und/oder eines Drehratensensors, verwendet werden.

9. Verfahren nach einem der vorangehenden Ansprüche,
**dadurch gekennzeichnet,**
**dass** die Eingangsdaten über eine an den Fahrzeugbus angeschlossene Einspeisevorrichtung auf den Fahrzeugbus gegeben werden.

10. Verfahren nach Anspruch 9,
**dadurch gekennzeichnet,**
**dass** eine Steuereinheit der Einspeisevorrichtung ein Steuergerät des Fahrerassistenzsystems emuliert.

11. Verfahren nach Anspruch 9 oder 10,
**dadurch gekennzeichnet,**
**dass** die Einspeisevorrichtung eine Recheneinheit umfasst oder mit einer Recheneinheit kommuniziert, die die Fahrsituation simuliert, insbesondere in Abhängigkeit von Eingaben des Kunden.

12. Verfahren nach einem der Ansprüche 9 bis 11,
**dadurch gekennzeichnet,**
**dass** externe Konfigurationsdaten eines Kunden in Bezug auf zu präsentierende und/oder simulierende Fahrerassistenzsysteme in die Einspeiseeinrichtung eingegeben werden.

13. Einspeisevorrichtung zur Präsentation und/oder Simulation wenigstens einer Funktionalität wenigstens eines Fahrerassistenzsystems an einem einen Fahrzeugbus umfassenden Kraftfahrzeug oder Kraftfahrzeugcockpit, umfassend ein Anschlussmittel zum Anschluss der Einspeisevorrichtung an den Fahrzeugbus, ein Speichermittel und eine zur Durchführung des Verfahrens nach einem der Ansprüche 1 bis 12 ausgebildete Steuereinheit.

14. Einspeisevorrichtung nach Anspruch 13,
**dadurch gekennzeichnet,**
**dass** sie eine Schnittstelle zum Anschluss externe Darstellungsmittel, insbesondere einer optischen und/oder akustischen Darstellungseinrichtung und/oder eines Hexapods, umfasst.

15. Einspeisevorrichtung nach Anspruch 13 oder 14,
**dadurch gekennzeichnet,**
**dass** sie eine Recheneinrichtung zur Simulation einer Fahrsituation umfasst und/oder zur Kommunikation mit einer solchen ausgebildet ist.
